# EUROPEAN PATENT APPLICATION

(11) **EP 0 840 231 A1**
(43) Date of publication of application: **06.05.1998**
(21) Application number: 97119049.1
(22) Date of filing: 31.10.1997
(51) Int. Cl.: G06F 12/08

(54) **Microprocessor comprising multi-level cache memory**

(30) Priority: 31.10.1996 US 29231
(71) Applicant: TEXAS INSTRUMENTS INCORPORATED, Dallas Texas 75265 (US)
(72) Inventor: Bosshart, Patrick W., Plano TX 75025 (US)
(74) Representative: Schwepfinger, Karl-Heinz, Dipl.-Ing.

(57) **Abstract**

A microprocessor having a memory hierarchy (10) is operated to perform various steps. One step issues an address corresponding to information. After this step, the method (t1) addresses a first cache circuit (14) in response to the address to determine whether the first cache circuit stores the information. Also after the issue step, the method (t1) addresses a second cache circuit (18) higher in the memory hierarchy than the first cache circuit in response to the address to determine whether the second cache circuit stores the information. In the preferred method, the step of addressing the second cache circuit occurs before determining whether the first cache circuit stores the information.

## Description

### BACKGROUND OF THE INVENTION

The present embodiments relate to microprocessors, and are more particularly directed to microprocessor circuits, systems, and methods with reduced cache read time.

Microprocessor technology continues to advance at a rapid pace, with consideration given to all aspects of design. Designers constantly strive to increase performance, while maximizing efficiency. With respect to performance, greater overall microprocessor speed is achieved by improving the speed of various related and unrelated microprocessor circuits and operations. For example, one area in which operational efficiency is improved is by providing parallel and out-of-order instruction execution. As another example, operational efficiency also is improved by providing faster and greater capability to retrieve information, with such information including instructions and/or data. The present embodiments are primarily directed at this latter capability.

Information retrieval is often performed in current microprocessors using multiple levels of cache structures. Typically, the lowest level cache (i.e., the first to be accessed) is smaller and faster than the cache or caches above it in the hierarchy. The number of caches in a given hierarchical line may vary, as will the number of clock cycles to evaluate a cache for a hit and read the information from it in the event of a hit. In some systems, both cache checking (for a hit and miss) and a cache read occur in a single clock cycle, but sometimes this requires a larger amount of power than if the cache were checked for a hit in one cycle and then read in the next cycle only if a hit occurs. This latter approach, however, increases the total number of clock cycles before the addressed information is read, and this increase in length may be further heightened in the instance where one or more such multiple-cycle caches are accessed after cache misses of other caches in the same hierarchy.

In view of the above, the present inventor addresses the drawbacks of certain prior art cache systems by providing various embodiments, as demonstrated below.

### BRIEF SUMMARY OF THE INVENTION

In a preferred method, a microprocessor having a memory hierarchy is operated to perform various steps. One step issues an address corresponding to information. After this step, the method addresses a first cache circuit in response to the address to determine whether the first cache circuit stores the information. Also after the issue step, the method addresses a second cache circuit higher in the memory hierarchy than the first cache circuit with the address, and also to determine whether the second cache circuit stores the information. In the preferred method, the step of addressing the second cache circuit occurs before determining whether the first cache circuit stores the information. Other circuits, systems, and methods are also disclosed and claimed.

### BRIEF DESCRIPTION OF THE SEVERAL VIEWS OF THE DRAWING

The present invention will now be further described by way of example, with reference to the accompanying drawings in which:
Figure 1 illustrates a block diagram of a hierarchy of data caches in a microprocessor memory system;
Figure 2 illustrates a prior art timing diagram for reading data from a two-clock access cache following a cache miss in a one-clock access cache;
Figure 3 illustrates a timing diagram of an inventive method embodiment for reading data from a two-clock access cache in response to a cache miss in a one-clock access cache, where the two-clock access cache is addressed before it is determined whether a miss occurs in the one-clock access cache;
Figure 4 illustrates a block diagram of a hierarchy of caches in a microprocessor memory system, wherein a unified cache is accessed in response to four different addresses, including data addresses, instruction addresses, TLB addresses, and snoop addresses;
Figure 5 illustrates a detailed block diagram of the unified cache circuit of Figure 4, including circuitry for prioritizing multiple addresses to the unified cache received in a single clock cycle;
Figure 6 illustrates the concept of address translation;
Figure 7 illustrates the timing diagram of Figure 3 with the addition of an address translation step performed at the same time as the access of the lowest-ordered cache;
Figure 8 illustrates the address format for the unified cache of Figure 4;
Figure 9 illustrates a timing diagram of an inventive method embodiment for use with Figure 4 to read data from a two-clock access instruction cache in response to a cache miss in a one-clock access instruction cache, where the two-clock access cache is addressed before it is determined whether a miss occurs in the one-clock access cache and using an address based on a prior page address; and
Figure 10 illustrates an exemplary data processing system within which the preferred embodiments may be implemented.

### DETAILED DESCRIPTION OF THE INVENTION

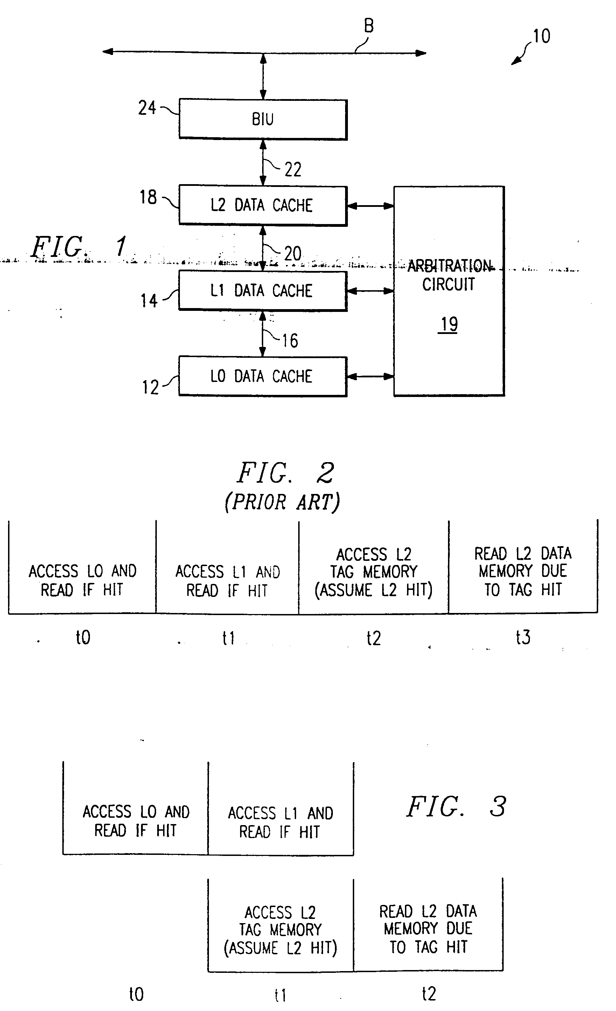

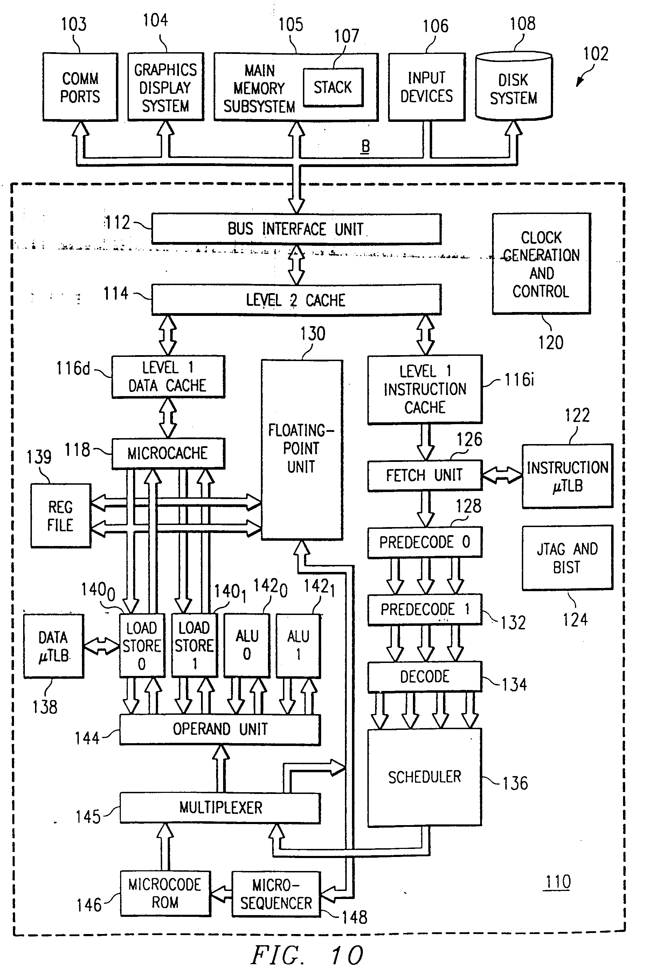

Figure 1 illustrates a block diagram of a microprocessor memory system 10 in accordance with the present embodiments. System 10 may be included within various types of microprocessor structures, and an example of one such structure is detailed below in connection with Figure 10. At this point, however, the details related to such a microprocessor other than in connection with the memory components of Figure 1 are neither shown nor explained in order to simplify the present discussion. Instead, such a discussion is deferred until the detailed discussion of Figure 10, below.

Turning to the blocks shown in Figure 1, system 10 defines a memory hierarchy in a manner known in the art, that is, a hierarchy which reads and writes data from a lowest ordered storage system to higher ordered storage systems. At the lowest level of such a system is a zero level data cache circuit, shown in Figure 1 as L0 data cache 12. The "L0" indication demonstrates the matter of memory hierarchy as is known in the art. Specifically, cache circuits with a lower numerical designation are commonly closer to the execution unit of the microprocessor pipeline (not shown) as compared to cache circuits with a higher numerical designation, such as the L1 and L2 data cache circuits discussed later. Moreover, the numerical designation of the cache provides an ascending indication of the order in which the caches are accessed by stages of an instruction pipeline (not shown) when it is either reading from, or writing data to, the caches. Thus, such an access first occurs to an L0 cache and, if a cache miss occurs to that cache, it is followed by an access to an L1 cache, and so forth through the memory hierarchy until a hit is found in either a cache or other memory structure. Returning to L0 data cache 12, in the present embodiment it preferably a 4-way set associative cache operable to store a total of 1 Kbytes of data in 16 byte blocks, and with each way operable to output 64 bits (i.e., 8 bytes) at a time.

System 10 further includes an L1 data cache 14, and which is connected to L0 data cache 12 via a bus 16. Again, the "L1" designation necessarily indicates that this cache is higher in the memory hierarchy as compared to L0 data cache 12. In the preferred embodiment, L1 data cache 14 is preferably a 2-way set associative cache operable to store a total of 8 Kbytes of data in 32 byte blocks, and with each way operable to output 128 bits (i.e., 16 bytes) at a time.

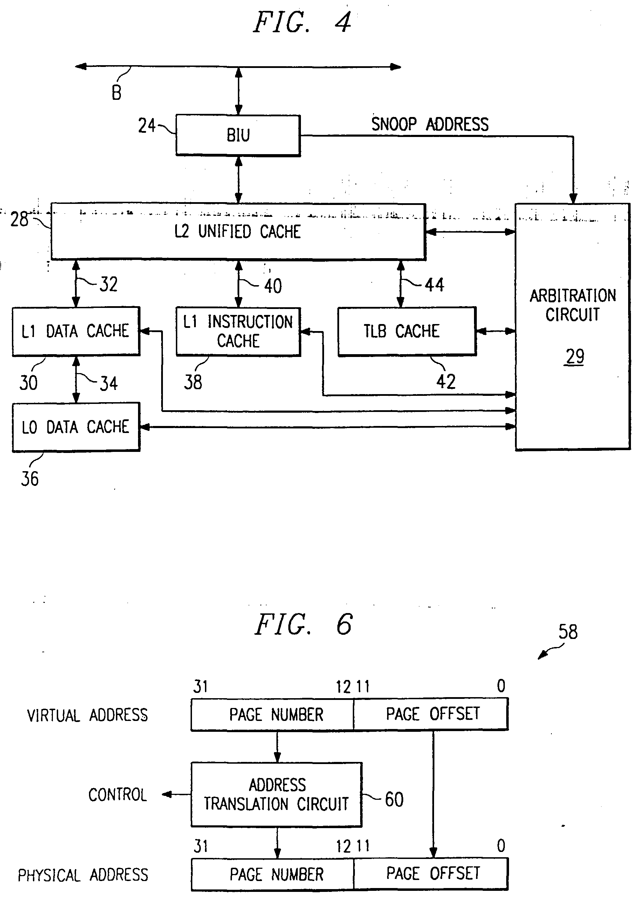

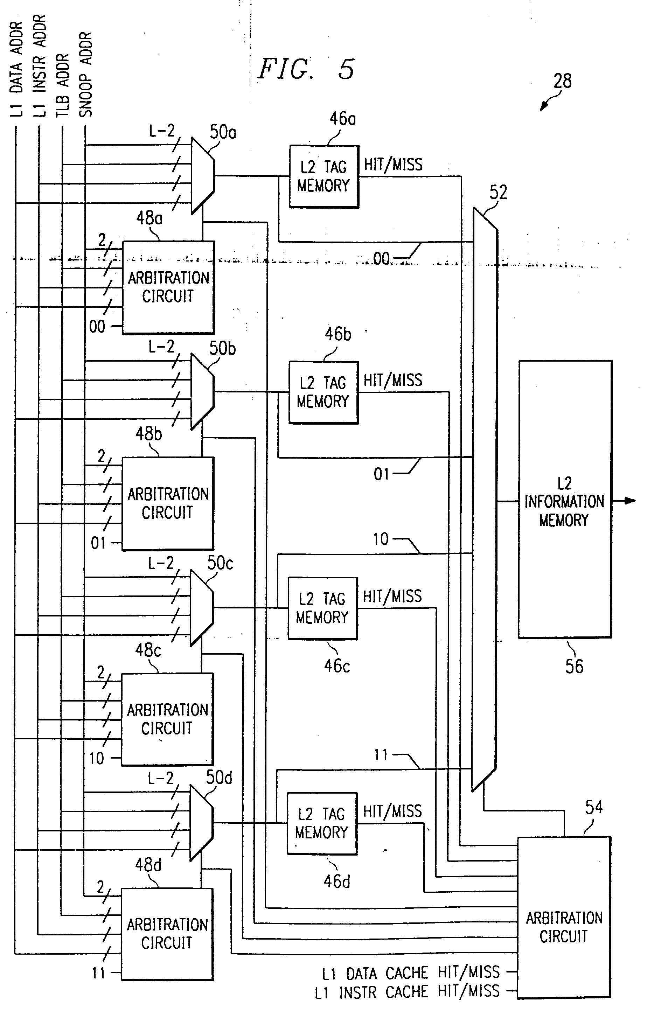

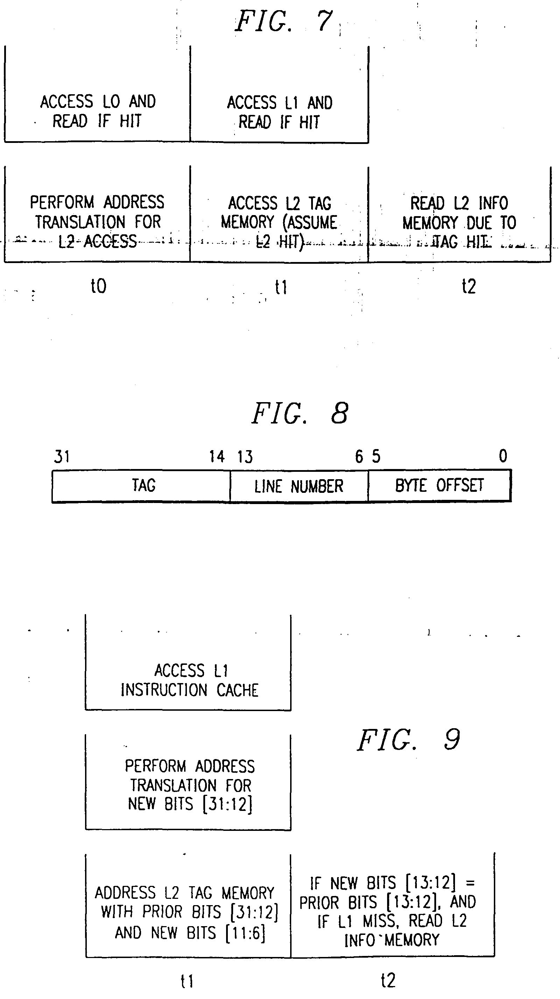

System 10 further includes an L2 data cache 18, and which is connected to L1 data cache 12 via a bus 20. In the preferred embodiment, L2 data cache 18 is preferably a 4-way set associative cache operable to store a total of 64 Kbytes of data in 64 byte blocks and 32 byte sub-blocks, and with each way operable to output 256 bits (i.e., 32 bytes) at a time. Additional details regarding addressing L2 data cache 18 are discussed later in connection with Figure 8. At this point, note at this point that this cache is referred to as a data cache, indicating that it stores data. However, as detailed later, in an alternative embodiment, L2 data cache 18 may be a unified cache, meaning in addition to storing data it stores other information as well (e.g., instructions as well as address translation information). A detailed discussion of these additional aspects, however, is deferred until Figure 4, below.

Having noted the three different levels of data caches in Figure 1, note further that each such cache 12, 14, and 18, is also connected to an arbitration circuit 19. Arbitration circuit 19 is included to demonstrate the functionality described below, such that addressing of the different caches may be ordered and prioritized according to the appropriate technique. Thus, given a statement of the arbitration and/or prioritization methods, various circuit implementations may be used to construct arbitration circuit 19 using knowledge in the art.

Completing the illustration of Figure 1, L2 data cache 18 is further connected by way of a bus 22 to a bus interface unit ("BIU") 24 which is connected to a bus B. Bus B extends external from the microprocessor including system 10 and, therefore, may control and perform communication between system 10 and other elements external from the microprocessor, including an external memory which would be higher in the memory hierarchy than L2 data cache 18 (and, of course, also higher than L1 data cache 14 and L0 data cache 12 as well). At this point, any additional elements external from the microprocessor are not detailed for sake of simplicity, with examples of such elements deferred until the discussion of Figure 10, below.

Figure 2 illustrates a timing diagram of a prior art cache accessing scheme for a three level cache architecture comparable to that shown generally in connection with Figure 1, above. Specifically, Figure 2 illustrates successive events in clock cycles t0 through t3 occurring where successive cache misses ultimately result in a cache access to L2 data cache 18. Turning to the specific clock cycles, during t0, an access to L0 data cache 12 is shown to miss, meaning L0 data cache 12 is provided the data address and the data sought is not in that cache. In response, arbitration circuit 19 detects the miss and causes the next step in t1. Particularly, during t1, the data is sought from L1 data cache 14, again resulting in a miss. In response, arbitration circuit 19 detects the miss and causes the next actions following t1. After t1, access is made to L2 data cache 18. However, note from above that L2 data cache 18 is considerably larger than the caches below it in the hierarchy. As a result, it is known in the art that the tag memory of L2 data cache 18 may be accessed in a cycle and, if a cache hit occurs, the data memory of L2 data cache 18 is accessed in the next successive clock cycle. This operation is shown in t2 and t3, where a tag memory hit occurs in L2 data cache 18 during t2, and the data from the data memory of L2 data cache 18 is read during t3.

The above operation of accessing a relatively larger cache over two cycles has both benefits and drawbacks. With respect to its benefit, if a miss occurs in the tag memory of the larger cache, then data need not be read from its corresponding data memory. Therefore, power consumption which otherwise would occur in accessing the data memory is eliminated. However, a drawback to this approach is that ultimately it takes two cycles to receive data from the large cache structure, that is, one to read the tag memory, and a successive one to read the corresponding data memory in the event of a cache hit. When coupled with the timing of Figure 2, therefore, this two cycle delay ultimately requires a four cycle time period to read data from the highest level cache in a three level cache structure such as that described above. An alternative prior art approach is to access both the tag and data memory of the higher level cache at the same time, and after detecting a miss in the next lowest level cache. However, typically such a higher level cache has a large set associativity (i.e., number of cache "ways") to increase the probability of cache hits. Under this alternative approach, for each access, the amount of bits per way times the number of ways is accessed, thereby increasing power consumption. Thus, both approaches suffer drawbacks, and these drawbacks are addressed by the present embodiments as demonstrated below.

In accordance with one inventive aspect of the present embodiments, Figure 3 illustrates a timing diagram of a cache accessing method for a multiple level cache architecture such as that shown generally in connection with Figure 1, above. Again, Figure 3 illustrates successive events in which successive cache misses result in a cache access to L2 data cache 18. However, for reasons more clear below, the method of Figure 3 accomplishes these operations in one less clock cycle than in the prior art approach of Figure 2, such that the method of Figure 3 may read data from L2 data cache 18 by the end of clock cycle t2 (as opposed to the end of clock cycle t3 as in the case of Figure 2). Turning then to t0 in Figure 3, during this clock cycle the method is the same as performed during t0 of Figure 2, that is, an access is made to L0 data cache 12 which results in a miss. As demonstrated below, however, after t0 the present embodiments differ in methodology from that shown in Figure 2.

Continuing after t0 in Figure 3, during t1 two independent actions are taken under the control of arbitration circuit 19. In one action, the information is sought from L1 data cache 14 and read if there is a cache hit, again as is the case in Figure 2. In stark contrast to Figure 2, however, in another action during t1, the method according to the present inventive embodiment also accesses the tag memory of L2 data cache 18. In other words, during the same time that a lower level cache is accessed, so is the next higher cache in the hierarchy of system 10 (i.e., before it is determined whether there is a hit in the lower level cache). The action taken by the present embodiment during t2 depends upon the result of the independent steps of t1. Specifically, if the access of L1 data cache 14 during t1 produces a cache hit, then the data sought also is read during t1 and, therefore, arbitration circuit 19 takes no further action with respect to L2 data cache 18. On the other hand, if the access of L1 data cache 14 during t1 produces a cache miss, and provided the tag memory of L2 data cache 18 produces a hit in t1, then during t2 arbitration circuit 19 causes a read of the data from L2 data cache 18 corresponding to the matched tag. Lastly, if the access of L1 data cache 14 during t1 produces a cache miss, and the access of L2 data cache 18 during t1 also produces a cache mess, then data is not read from L2 data cache 18 during t2 (instead, it would be sought from some higher level memory structure).

From the above discussion of Figure 3, one skilled in the art will appreciate that the method embodiment of Figure 3 permits reading of data from a cache hit of L2 data cache 18 by the end of a total of two cycles (i.e., after t1 and t2) after the conclusion of the miss in L0 data cache 12. Thus, there is a considerable performance improvement over the prior art method of Figure 2 which produced the same L2 cache information by the end of a total of three cycles (after t1, t2, and t3). Moreover, note that the method of Figure 3 may be accomplished using appropriate control circuitry within arbitration circuit 19, or within other circuits which control the order and timing for accessing caches in a multi-cache system. However, note further that in instances of a cache hit of L1 data cache 14, then the access to the tag memory of L2 data cache 18 causes extra power consumption, but this penalty is small when compared to the benefit of receiving data faster in the case where an L2 cache read is necessary. Still further, the present embodiment may be further implemented in combination with various additional principles set forth below, which further improve upon the present state of the art.

Figure 4 illustrates a block diagram of a microprocessor memory system 26 in accordance with further concepts of the present embodiments. Specifically, recall from the above discussion of Figure 1 that it was stated that L2 data cache 18 may be a unified cache; in this regard, Figure 4 illustrates such an example of an L2 unified cache 28. L2 unified cache 28 is connected toward the external side of the microprocessor in the same manner as in Figure 1 and, therefore, like reference numerals, buses, and circuits are used again with respect to buses 22 and B as well as BIU 24. However, in system 26, L2 unified cache 28 may be addressed in connection with up to four different sources of addresses, each of which is arbitrated using arbitration circuit 29, and which is described below.

A first source giving rise to a potential addressing of L2 unified cache 28 is L1 data cache 30. Specifically, L1 data cache 30 is connected via a bus 32 to L2 unified cache 28 and is also connected for control purposes to arbitration circuit 29. Similar to the case of Figure 1, in Figure 3 a data miss in L1 data cache 30 causes arbitration circuit 29 to seek that data from L2 unified cache 28. Moreover, L1 data cache 30 is connected via a bus 34 to an L0 data cache 36. Again, therefore, L0 data cache 36 is actually first accessed, with a miss in L0 data cache 36 resulting in an access to L1 data cache 30, and with a miss in L1 data cache 30 resulting in a possible read of L2 data cache 28. In the preferred embodiment, the storage sizes for each of these three caches is the same as that specified in connection with Figure 1, above.

A second source giving rise to a potential addressing of L2 unified cache 28 is L1 instruction cache 38. Specifically, L1 instruction cache 38 is connected via a bus 40 to L2 unified cache 28 and is also connected for control purposes to arbitration circuit 29. As its name implies, L1 instruction cache 38 stores instructions (as opposed to data as is stored in L1 data cache 30). In the preferred embodiment, L1 instruction cache 38 is constructed and sized in the same manner as L1 data cache 30 and, therefore, is preferably a 2-way set associative cache operable to store a total of 8 Kbytes of information; here, the information is instructions in 32 byte blocks, and each way is operable to output 128 instruction bits (i.e., 16 bytes) at a time.

A third source giving rise to a potential addressing of L2 unified cache 28 is a translation lookaside buffer ("TLB") cache 42. Specifically, TLB cache 42 is connected via a bus 44 to L2 unified cache 28 and is also connected for control purposes to arbitration circuit 29. In the preferred embodiment, as is common in the microprocessor art, logical instruction addresses are translated to corresponding physical addresses. In this context, TLB cache 42 stores a table of some of the existing translations so that such translations may be accessed at subsequent times without having to re-calculate the translation. In addition, if there is a miss in the look up to TLB cache 42, then it begins a table walk through page tables in main memory to determine the address translation. These main memory page table also may be stored, in part or whole, in L2 unified cache 28. Lastly, in the preferred embodiment, TLB cache 42 is preferably 256 entries, 4-way set associative, and sized such that each lines stores a single translation.

A fourth source giving rise to a potential addressing of L2 unified cache 28 is any circuit providing a snoop request to L2 unified cache 28. As is known in the art, snooping is a function which ensures memory coherency through different levels in a memory hierarchy. The snoop request may be generated either internally or externally from the microprocessor. Typically, a snoop occurs by presenting an address to one or more levels of the memory system. In Figure 4, this functionality is shown by way of a snoop address input from BIU 24 to arbitration circuit 29 which, in turn, may present the snoop address to any of the cache structures of Figure 4. Each cache may be directed to respond in various manners to the snoop address. For example, the cache may be directed to merely confirm whether it stores information corresponding to the snoop address. As another example, the cache may be directed to output the information corresponding to the snoop address if it has such information. As yet another example, the cache may be directed to merely invalidate the information corresponding to the snoop address if it has such information. In any event, the snoop address poses yet another potential address to L2 unified cache 28.

As detailed below, system 26 of Figure 4 also may implement the concurrent cache access method depicted in Figure 3 as further modified for certain caches. Specifically, L2 unified cache 28 may be accessed at the same time as an access to either L1 data cache 30 or L1 instruction cache 38. However, before examining the details of such operations, note further that the additional number of address sources that Figure 4 provides over the system of Figure 1 further complicates the process of addressing L2 unified cache 28. Particularly, because of the four different address sources, during a single clock cycle, anywhere from zero to four addresses may be concurrently presented to L2 unified cache 28. Moreover, recall that the inventive method of Figure 3 increases the frequency of accesses to an L2 cache by presenting the tag address at the same time the L1 cache is accessed, even though the L2 cache data may then not be used if an L1 cache hit occurs. Therefore, both the existence of multiple address sources as well as the Figure 3 methodology increase the frequency of L2 accesses, thereby increasing the likelihood that it is desirable to present more than one address to L2 unified cache 28 at the same time. In view of this likelihood, the present inventor provides below still additional embodiments to address this aspect. In addition, the existence of the other addressing circuits raises yet other considerations, and these considerations are also discussed below as well.

Figure 5 illustrates a more detailed schematic of L2 unified cache 28 as implemented in system 26 of Figure 4, above. To accommodate the four different potential address sources, L2 unified cache 28 includes interleaved tag memories. Specifically, in the preferred embodiment, four bank interleaved tag memories are used and are designated as 46a through 46d. Each interleaved tag memory 46a through 46d is equal in size and, therefore, stores one-fourth of the total number of tag addresses. In the preferred embodiment, each interleaved tag memory 46a through 46d includes 256 lines. The purpose of the interleaved configuration is better understood later in connection with the operational description of the present Figure 5. Before reaching this discussion, however, note the following other circuits and connections of Figure 5. Particularly, Figure 5 further illustrates each of the four potential source addresses as provided by arbitration circuit 29, that is, the L1 data cache 30 address, the L1 instruction cache 38 address, the TLB cache 42 address, and the snoop address. Although not shown, the requested address is preferably separated into two components as known in the art, that is, a line address which is used to address a tag memory and a tag address which is used to compare against the information output from the line address. Two bits from each of the line addresses called bank select bits are connected to a succession of four arbitration circuits designated 48a through 48d. In this context, note further that each of arbitration circuits 48a through 48d receives a different two bit bank identification code which, as demonstrated below, causes the corresponding arbitration circuit to arbitrate when the bank select bit from two or more addresses match the identification code of the arbitration circuit. In the present embodiment, a two bit bank identification code of 00 is connected to arbitration circuit 48a, a two bit bank identification code of 01 is connected to arbitration circuit 48b, a two bit bank identification code of 10 is connected to arbitration circuit 48c, and a two bit bank identification code of 11 is connected to arbitration circuit 48d. The remaining bits for each line address (designated as L-2 bits in Figure 5) are connected to each of a succession of four multiplexers designated 50a through 50d. As demonstrated in greater detail below, each multiplexer 50a through 50d may select one of its four inputs in response to a prioritization provided by a corresponding arbitration circuit 48a through 48d. The output of each multiplexer 50a through 50d is connected to a corresponding one of the L2 tag memories. For example, the output of multiplexer 50a is connected to the L2 tag memory 46a, the output of multiplexer 50b is connected to the L2 tag memory 46b, and so forth. The output of each multiplexer 50a through 50d is also connected to an input of a multiplexer 52. For reasons more clear below, note further that the two bit bank identification code is merged as the two least significant bits to the output of each corresponding multiplexers 50a through 50d before the multiplexer output is presented as an input to multiplexer 52. For example, bank identification code 00 is merged to become the two least significant bits of the output of multiplexer 50a as it is presented to multiplexer 52. Similarly, bank identification code 01 is merged to become the two least significant bits of the output of multiplexer 50b as it is presented to multiplexer 52, and so forth for multiplexers 50c and 50d as well. Multiplexer 52 is controlled by an arbitration circuit 54. As demonstrated in greater detail below, multiplexer 52 may select one of its four inputs in response to a prioritization provided by arbitration circuit 54 which causes multiplexer 52 to output one of its inputs based on whether there are requests by more than one of the above-described address sources in a single clock access, and whether there is a hit in L1 data cache 30 (or L1 instruction cache 38) during that clock access. To accomplish its prioritization, therefore, arbitration circuit 54 has as inputs the control output of each arbitration circuit 48a through 48d, as well as an indication whether there is a hit from each L2 tag memory 46a through 46d, and an indication whether there is a hit in L1 data cache 30 (or L1 instruction cache 38). The specific operation in response to these signals is detailed below. Lastly, note that the address output by multiplexer 52 is connected to an L2 information memory 56, which stores the unified information described above (i.e., data, instructions, and address translation), preferably in 64 byte blocks.

The operation of L2 cache circuit 28 as shown in Figure 5 is based on a prioritization of the possible four address sources described above. Moreover, this prioritization may be thought of as handled at two different levels, a first level causing selection of a higher priority by each of arbitration circuits 48a through 48d and a second causing selection of a higher priority by arbitration circuit 54. In other words, and as detailed below, if more than one source seeks access to the same bank tag memory during the same clock cycle, then the corresponding one of arbitration circuits 48a through 48d enforces the priority discussed below; thereafter, if more than one source seeks access to information memory 56 during the same clock cycle, then arbitration circuit 54 then enforces the same priority discussed below. In the preferred embodiment, the priority assigned to the arbitration circuits as a whole is in the order shown in the following Table 1, with higher priority assigned toward the top of the list and lower priority assigned toward the bottom of the list:

**Table 1**

| Priority | Request |
|---|---|
| 1. | Snoop address |
| 2. | L1 data cache miss before the current clock cycle |
| 3. | L1 instruction cache miss before the current clock cycle |
| 4. | TLB cache miss before the current clock cycle |
| 5. | L1 data cache miss during the current clock cycle |
| 6. | L1 instruction cache miss during the current clock cycle |
| 7. | TLB cache miss during the current clock cycle (optional) |

Given the above, a snoop address always receives the highest priority, and is followed by the remaining six possibilities in Table 1. Detailed examples are provided below, but first note some general examples. If a snoop address (priority 1) and an address corresponding to L1 data which caused a miss in the current clock cycle (priority 5) are both presented to L2 cache 28, then only the snoop address is used to read the L2 cache 28 information memory 56 due to its higher priority. As another example, if an L1 data cache address caused a missed in a preceding clock cycle (priority 2) and is now presented to L2 cache 28 at the same time as an address corresponding to L1 data which caused a miss in the current clock cycle (priority 5), then only the L1 data cache address which caused a missed in a preceding clock cycle is used to read the L2 cache 28 information memory due to its higher priority. Still other examples will be appreciated by a person skilled in the art, particularly in view of the remaining discussion below.

Before proceeding with a detailed discussion of the operation of Figure 5, note also that priority 7 in Table 1 is listed as optional. This indication is because such an access may not necessarily be included within the current scheme for the following reasons. Recall from above that a miss in TLB cache 42 causes a table walk through page tables in L2 cache 28. However, in typical implementations, misses in TLB cache 42 are relatively infrequent. Therefore, the clock cycle savings by implementing the timing of Figure 3 with respect to a TLB access rather than an L1 cache access is not as important as it is for a miss in L1 data cache 30, or a miss in L1 instruction cache 38. Consequently, the additional need to include TLB accesses in the priority to accomplish the timing of Figure 3 may not be justified and, therefore, in some embodiments may not be done.

Having established a preferable priority for the system of Figure 5, its operation is presented generally, and then shown more specifically by way of various examples. Generally, an address may be issued to L2 cache 28 by any one or more of the above-described four sources. Thus, in a given clock cycle, L2 cache 28 may process between zero and four addresses. Generally, if the received addresses each address a different one of the L2 bank tag memories 46a through 46d, and any one of those bank tag memories detects an address hit, then each such bank tag memory outputs a hit signal, and arbitration circuit 54 causes multiplexer 52 to output the address corresponding to the hit with the highest priority. Note, however, that despite a possible cache hit, the above operation further takes into account the method of Figure

Specifically, if the currently-requested address corresponds to an L1 data cache (or instruction cache) address, but an L1 data cache (or instruction cache) hit occurs during the same clock cycle, then arbitration circuit 54 does not output that address to L2 information memory 56 since a hit occurred at a lower level and, therefore, there is no need to output duplicate information from information memory 56. In addition to the above operation, consider further the operation if any two or more of the addresses seek to address a same bank tag memory 46a through 46d. In this instance, the corresponding arbitration circuit 48a through 48d causes only the highest priority of those two or more addresses to address the corresponding bank tag memory 46a through 46d. Once this level of priority is enforced in this manner, again circuit 54 causes multiplexer 52 to output the address with the highest priority, and again subject to the possible exception where the highest priority address corresponds to an address which was satisfied by a hit in L1 data cache 30 (or L1 instruction cache 38). Again, to better illustrate these concepts, a few examples are set forth below, and from those as well as the above description a person skilled in the art will appreciate the overall operation of L2 cache 28, as well as potential modifications and alterations to that system.

As a first example of the operation of L2 cache 28, consider a clock cycle where a snoop address and an L1 data cache address are issued to L2 cache 28 in the same cycle. First, note that two bank select bits of each address are connected to each arbitration circuit 48a through 48d. Consequently, if these two bits match for both addresses, then those addresses are attempting to address the same one of the four tag memories 46a through 46d; on the other hand, if these two bits do not match for both addresses, then those addresses are attempting to address different ones of the four tag memories 46a through 46d. Assume for the current example that the two bank select bits to the arbitration circuits 48a through 48d match. Consequently, the one of the arbitration circuits 48a through 48d with a matching bank identification code outputs a control signal causing its corresponding multiplexer 50a through 50d to select the input address of the higher priority request. In the current example, therefore, assume that both the snoop address and the L1 data address have bank select bits equal to 00; therefore, these bits match the bank identification code, and are thus necessarily directed to an address range, corresponding to L2 tag memory 46a. Consequently, in response to the two matching bank select bits, arbitration circuit 48a causes multiplexer 50a to select the snoop address based on its higher priority in Table 1. Therefore, the snoop address is output by multiplexer 50a to its corresponding tag memory 46a. Assume further, now, that there is a hit in tag memory 46a. Consequently, arbitration circuit 54 is notified via L2 tag memory 46a that a hit has occurred, and may determine from the control signal output by arbitration circuit 48a that a snoop address is being presented. In response, arbitration circuit 54 causes multiplexer 52 to select the snoop address from the output of multiplexer 50a (which also has bits 00 merged in as its least two significant bits) and present it to information memory 56. Given this example, therefore, information memory 56 may output (or otherwise respond to the snoop request) the information corresponding to the snoop address.

As a second example of the operation of L2 cache 28, consider a clock cycle where a snoop address and an L1 data cache address are issued to L2 cache 28 in the same cycle as in the previous example, but here assume that the two bank select bits of each address connected to each arbitration circuit 48a through 48d do not match (i.e., those addresses are attempting to address different ones of the four tag memories 46a through 46d). More particularly, assume the snoop address is within the range corresponding to L2 tag memory 46a (i.e., bank select bits equal 00) while the L1 data cache address is within the range corresponding to L2 tag memory 46d (i.e., bank select bits equal 11). Consequently, arbitration circuit 48a causes its corresponding multiplexer 50a to select the snoop address while arbitration circuit 48d causes its corresponding multiplexer 50d to select the L1 data address. In this example, therefore, two different tag memories are accessed in a single clock cycle. Next, however, assume that the snoop address causes a miss in L2 tag memory 46a while the L1 data address causes a hit in L2 tag memory 46d. In this case, arbitration circuit 54 recognizes that the snoop address has priority over the L1 data address. Nevertheless, because the snoop address caused a miss while the L1 data address caused a hit, then the snoop address does not need to reach L2 information memory 56 (i.e., because of the snoop miss). Thus, by the end of the current clock cycle, the L1 data address may instead be presented to L2 information memory 56. Toward this end, arbitration circuit 54 controls multiplexer 52 to select the address from multiplexer 50d (i.e., the L1 data address, and which also has bits 11 merged in as its least two significant bits), and it is presented to information memory 56 to read the L2 data in the next clock cycle.

As a third example of the operation of L2 cache 28, consider again the second example above (i.e., a clock cycle where a snoop address and an L1 data cache address are issued to L2 cache 28 in the same cycle and those addresses are attempting to address different ones of the four bank tag memories 46a through 46d) but with an additional assumption. For this third example, assume now that during the same cycle that L2 cache 28 is processing the two addresses, that the L1 data cache address also causes a hit in L1 data cache 30. Recall also from the second example that the snoop address is not selected by multiplexer 52 because the snoop address caused a miss in tag memory 46a. However, for this third example, note that arbitration circuit 54 is notified of the hit in L1 data cache 30. Therefore, returning to the method of Figure 3, recall that when a hit occurs in an L1 data cache, there need not be an access in the next clock cycle to read the L2 data cache. Thus, in Figure 5 for this third example, multiplexer 52 does not select the L1 data address and, therefore, for the present clock cycle, no address is presented to L2 information memory 56 and L2 information memory 56 is not read during the next successive clock cycle.

As a fourth example of the operation of L2 cache 28, consider a clock cycle, which for discussion sake is called a first clock cycle, where an L1 data cache address and an L1 instruction cache address are issued to L2 cache 28 in that first clock cycle. Note that during the beginning of the first clock cycle, if there is no indication that these addresses were missed in an earlier cycle, then it is assumed that they correspond to priority 5 and 6, respectively. Now, assume again that the two bank select bits of each address connected to each arbitration circuit 48a through 48d do not match. More particularly, assume the L1 data cache address has bank select bits of 00 while the L1 instruction cache address has bank select bits equal 01. Consequently, during the first clock cycle, arbitration circuit 48a causes its corresponding multiplexer 50a to select the L1 data address while arbitration circuit 48b causes its corresponding multiplexer 50b to select the L1 instruction address. Next, because both addresses correspond to an L1 miss, arbitration circuit 54 controls multiplexer 52 to select the L1 data address from multiplexer 50a due to its higher priority and this selected address, along with its two merged least significant bits, is presented to information memory 56 to read the L2 data in the second clock cycle (i.e., the one following the immediately preceding first clock cycle). In addition, therefore, note that the L1 instruction cache address was not serviced by L2 information memory 56 in the second clock cycle due to its lower relative priority. Instead, the present embodiments include a technique, such as enabling a flag or some other indicator associated with the non-serviced address. Specifically, this indicator denotes that the L1 instruction address is now given a higher priority, because it formerly was a miss during the current clock cycle (i.e., priority 6) but now becomes a miss before the current clock cycle (i.e., priority 3). As demonstrated by the fifth example immediately below, therefore, this advance in priority may be subsequently detected in order to allow the L1 instruction address to reach information memory 56.

As a fifth example, consider an ongoing sequence from the fourth example above, where in a first clock cycle a priority 5 and 6 address were issued to L2 cache 28, where the priority 5 address was used to read L2 information memory 56 during a second clock cycle, and where the priority 6 address then was changed from a priority 6 address to a priority 3 address (i.e., an L1 instruction cache miss occurring before the current clock cycle). In this fifth example, therefore, the address which was not connected to L2 information memory 56 is again provided to L2 cache 28. However, during this same clock cycle in which this address is re-presented, assume also that another L1 data cache address is received by L2 cache 28. Here again, if there is no indication that the L1 data cache address was missed in an earlier cycle, then it is assumed that it corresponds to a priority 5 request (i.e., a miss in the current clock cycle). Now, recall from the fourth example above that the L1 instruction cache address includes bank select bits equal to 01. Further, assume that the bank select bits for the newly received L1 data cache miss address equal 11. Therefore, arbitration circuit 48b causes multiplexer 50b to select the priority 3 address (with the merged LSBs of 01) and output it to L2 tag memory 46b, while arbitration circuit 48d causes multiplexer 50d to select the priority 5 address (with the merged LSBs of 11) and output it to L2 tag memory 46d. Assuming, however, that there is now a hit in both L2 tag memories 46b and 46d, then in the next clock cycle arbitration circuit 54 causes multiplexer 52 to select only the higher priority address and, therefore, the priority 3 address is connected to L2 information memory 56, thereby causing the output of the instruction information corresponding to the L1 instruction cache miss from an earlier clock cycle. In other words, arbitration circuit 54 recognizes the enabled flag or the like which effectively converts the priority 6 address to a priority 3 address.

Given the above examples, one skilled in the art will appreciate that the bank interleaving of L2 tag memories 46a through 46d in the manner described above may permit multiple addresses to be processed during the same clock cycle. Indeed, if each of the four address sources issues an address corresponding to a different one of L2 tag memories 46a through 46d, then each corresponding arbitration circuit 48a through 48d may allow the issued address to pass to its corresponding tag memory to determine whether there is a hit of that address. If a miss occurs in response to a certain address, then the next lower priority address is still therefore processed during the same clock cycle and presented to information memory 56 to read the information corresponding to that address during the next cycle (unless the next lower priority address is based on a lower order cache that was hit in the current cycle). Thus, in many instances where two or more requests are received in the same cycle, they may both be processed and resolved without having to delay one or more in favor of another.

In addition to the above, the concept of address translation also may raise various other considerations in connection with the present embodiments. Each of these considerations is addressed below. Before addressing such considerations, a brief introduction to address translation is provided in connection with Figure 6, which depicts an address translation system designated generally at 58 and as known in the art. System 58 converts a virtual address to a physical address. To demonstrate an example, system 58 depicts the conversion of a 32 bit address. Thus, system, 58 begins with a 32 bit virtual address, which is separated into two components: (1) a virtual page offset having bits [11:0]; and (2) a virtual page number having bits [31:12]. In performing the address translation, the page offset is directly forwarded to become the lower order bits (i.e., the physical page offset) for the physical address. However, the virtual page number is coupled to an address translation circuit 60. Address translation circuit 60 typically performs calculations and/or table look ups to translate the virtual page number to a physical page number using a TLB. Additionally, address translation circuit 60 may output some type of control, such as a fault signal or other signal representing an action to be taken in response to the translation. Given the above, in the event of a successful address translation, note that the physical page offset is available for subsequent action before the physical page number. For example, the physical page offset may be immediately available while the physical page number is not available until a later part of the same clock cycle, or not until an additional clock cycle passes to process through address translation circuit 60. This fact, therefore, may be further considered in view of the present embodiments as demonstrated below.

Having described some general principles regarding address translation, it is now instructive to first apply them to the earlier discussion of addressing two data caches during the same clock cycle, and then follow that discussion with some observations about data translation with respect to the other address sources of Figure 4. With respect to the instance of addressing two data caches during the same clock cycle, Figure 7 illustrates the timing diagram of Figure 3 but further depicts the step of address translation. Specifically, the first row in Figure 7 is identical to the first row of Figure 3. In the second row, however, at t0, there is shown the additional step of address translation to generate the address to access an L2 cache. Note further that this same address translation step is true in either system 10 of Figure 1 (i.e., accessing L2 data cache 18) or system 26 of Figure 4 (i.e., accessing L2 unified cache 28). In either event, because the address translation occurs during t0, the translated address is available to address the tag memory of the L2 cache (either 18 or 28) during t1. Therefore, the general method of address translation as shown in Figure 6 does not affect the present embodiments in the context of data accesses. However, as shown below, address translation does raise additional considerations with respect to the remaining address sources of Figure 4.

While Figure 7 and the above discussion demonstrates the relationship between address translation and cache access for data, the following discussion now examines the relationship between address translation and cache access for instructions. In the latter instance, a difference arises because of the differing number of caches in the Figure 4 hierarchy as between instructions versus data. Specifically, returning to Figure 4, recall that a data access starts with L0 data cache 36 during t0. From Figure 7, it is now known that an address translation also occurs during the time of the access to L0 data cache 36. Thus, if there is a miss to L0 data cache 36, then in the next clock cycle both L1 data cache 30 and L2 unified cache 28 may be accessed in an attempt to locate the addressed data. However, with respect to instructions, note that the first access is not to an L0 level cache but, instead, is to L1 instruction cache 38. As a result, if the method of Figure 3 (i.e., concurrent access to two caches) is applied, then at the same time L1 instruction cache 38 is accessed to locate an instruction so is L2 unified cache 28. However, in this case, note that there is not a preceding clock cycle in which to perform the address translation for accessing L2 unified cache 28. Without this preceding clock cycle, at first glance it appears the concurrent cache access method of Figure 3 may not apply to instruction accessing of caches 38 and 28. However, the following discussion provides yet additional considerations which permit the present embodiments to allow such concurrent cache accesses for instructions in certain instances.

To further appreciate the effect of address translation with respect to seeking instructions from L2 cache 28, it is helpful to detail the format of an address to L2 cache 28 and, therefore, such an address is illustrated in Figure 8. Recall from above that L2 unified cache 28 is preferably a 64 Kbyte memory where each of its tag memories 46a through 46d stores 256 lines, and that its information memory 56 stores information in 64 byte blocks. Thus, turning to the address shown in Figure 8, to address one of the 64 byte blocks, the address has a six bit byte offset (i.e., bits [5:0]). To address one of the 256 lines, the address has an eight bit line number (i.e., bits [13:6]). Lastly, the address has an eighteen bit tag (i.e., bits [31:14]). Given the format, and according to known techniques, note further that L2 unified cache 28 is accessed over two cycles as follows. Typically, in the first cycle, a selected eight bit line number (i.e., bits [13:6]) is applied to a tag memory, and the tag memory outputs the stored information at the addressed line. In connection with this access, however, recall from the above discussion of Figure 6 that only bits [11:0] are available at the beginning of the addressing clock cycle, while bits [13:12] will not be available until some time into, or the end of, t1. In other words, the newly translated bits [13:12] are not yet available at the beginning of t1. Thus, one approach is to merely wait another clock cycle before addressing the line so that bits [13:12] are then available. As detailed below, however, the present embodiments contemplate an alternative and more efficient approach which, in various instances, permits addressing of the line before bits [13:12] are available. Completing, therefore, the discussion of the address of Figure 8, note also that during the first clock cycle, the eighteen bit tag (i.e., bits [31:14]) is compared to the stored information output from the tag memory. If a match occurs, then in the second clock cycle the address (or a portion thereof) is used to address the information memory which outputs the addressed information by the end of the second clock cycle.

Given the above, the present inventor has further recognized the application of various of the above principles when the timing of Figure 3 is attempted in connection with the concept of accessing an instruction from caches 38 and 28 at once. In this regard, Figure 9 illustrates a timing diagram of such an instruction access, with additional considerations directed to address translation in connection with the instruction access. Given these considerations, it is demonstrated how the present embodiments may further implement the concurrent cache method for the case of instruction caches in addition to (or in lieu of) data caches which were discussed above. Turning then to Figure 9, during t1, L1 instruction cache 38 is addressed to determine whether it stores the desired instruction. Also during t1, address translation is being performed; thus, recall from the above discussion that bits [11:0] are immediately available from the address translation while bits [31:12] are not available until some into, or by the end of, t1. Nevertheless, in order to access two caches at once, Figure 9 also shows during t1 that L2 unified cache 28 is accessed to determine whether it stores the desired instruction. In connection with this latter access, however, recall from above that it is necessary during the first clock cycle of an access to L2 unified cache 28 to provide a line address of bits [13:6]. However, only bits [11:0] are available from the address translation, while bits [13:12] (as well as bits [31:14]) will not be available until some time into, or the end of, t1. In other words, the newly translated bits [13:12] are not yet available at the beginning of t1. Nevertheless, in the present embodiment, it is recognized that instructions by their nature are often located in the same page within memory by virtue of their general sequential nature. Thus, in order to begin the access to L2 cache 28 during t1, bits [13:12] from the most recent prior instruction access are used as a prediction to form the entire necessary line address of bits [13:6]. Concluding, therefore, during t1, the tag memory or memories of L2 unified cache 28 are preferably accessed with a line address of bits [13:6], where bits [11:6] are from the forwarded page offset while bits [13:12] are from the most recent prior instruction address. By constructing an instruction address in this fashion, L2 unified cache 28 may begin its access during the same clock cycle as the access to L1 instruction cache 38.

Turning now to t2 of Figure 9, if a hit occurs in L1 instruction cache 38 by the end of t1, then the desired instruction need not be read from L2 unified cache 28 and, thus, no more activity is necessary with respect to L2 unified cache 28 in connection with the presently desired instruction. On the other hand, if a miss occurs in L1 instruction cache 38 by the end of t1, then the preferred method of concurrent cache access is used to attempt to read the desired instruction from L2 unified cache 28 in the next successive clock cycle, that is, by the end of t2. Before performing this read, note by the beginning of t2 that the full address translation from t1 is complete. Therefore, the calculated value of bits [13:12] is now available, whereas recall that during t1 the most recent previous value of bits [13:12] were used to begin the access to L2 unified cache 28. Thus, during t2, the present embodiment first determines whether the calculated value of bits [13:12] matches the most recent previous value of bits [13:12]. If not, no read is made from L2 unified cache 28 during t2 because it has been incorrectly addressed (i.e., the assumption based on instruction proximity on the same page was erroneous for the current instruction). Instead, L2 unified cache 28 may be re-addressed in a subsequent clock cycle using the now correctly calculated value of bits [13:12], as well as the other required bits to address L2 unified cache 28. On the other hand, if the calculated value of bits [13:12] matches the most recent previous value of bits [13:12], then also during t1 the new tag bits [31:14] as calculated from the address translation are compared to the output of the L2 tag memory and, provided a hit occurs, the information corresponding to the present address is reads from the L2 information memory 56 by the end of t2.

Before proceeding, note that the complication of address translation and the preferred method demonstrated by the timing of Figure 9 arises because the number of bits necessary to address the tag memory exceeds the number of bits in the page offset. Thus, as an alternative to the method demonstrated by Figure 9, the number of sets in L2 cache 28 may be increased from four to 16. As a result, only bits [11:6] would be required to address the tag memory during t1 in Figure 9, and those bits would be already available because bits [11:0] are immediately forwarded as shown in Figure 6. As another example, the number of lines in each tag memory could be reduced so that the number of bits necessary to address the tag memory equals (or is less than) the number of bits in the page offset. However, this decreases the cache size, which may be undesirable. In addition, these are but two examples and other modifications to page size, number of lines, and byte offset also could be made in this manner by a person skilled in the art to overcome these complications. Moreover, another modification to the timing complication raised by address translation is to wait to complete the address translation, but still begin the addressing of L2 unified cache 28 before it is determined whether there is a miss in a lower level cache. In other words, the first step in accessing L2 unified cache 28 (i.e., addressing lines in tag memories) may be deferred to occur after the beginning of the same clock cycle as the access to the lower level cache but before it is determined whether there is a miss (or hit) in the lower ordered cache. Such an approach is likely to be successfully implemented in that a TLB is typically smaller and faster than an L1 cache.

Having addressed the implications of address translation with respect to concurrently accessing L2 unified cache 28 at the same time as either lower level data cache 30 or a lower level instruction cache 38, a brief additional discussion is worthy with respect to the other two potential address sources from Figure 4, that is, a snoop address request or an address request to TLB cache 42. In connection with snoop addresses, note that such an address is generated externally. As a result, there is no concern of a necessary one or more clock cycles to perform an address translation as above. Thus, to the extent that a lower level cache is snooped, L2 could be concurrently snooped as well. To the contrary, however, in connection with an address to TLB cache 42, typically an extensive address translation of more than one clock cycle is necessary. Consequently, under current technology, it is not preferable that L2 unified cache 28 is accessed at the same time with the same address as applied to TLB cache 42.

Lastly, the present embodiments may be further modified given other address translation and timing considerations arising in the art. For example, in some microprocessor architectures, address translation is completed before an access to any level cache occurs. In such an event, much of the complication discussed above in connection with Figures 6 through 9 is eliminated. In other words, if the address translation is complete before a given cache level is accessed, then at the same time that given cache level is accessed so may be the next higher level cache in a manner comparable to Figure 3.

Having described the above embodiments, Figure 10 illustrates a block diagram of a microprocessor embodiment into which the above embodiments may be incorporated. Figure 10 depicts an exemplary data processing system 102, including an exemplary superscalar pipelined microprocessor 110 within which the preferred embodiment is implemented, will be described. It is to be understood that the architecture of system 102 and of microprocessor 110 is described herein by way of example only, as it is contemplated that the present embodiments may be utilized in microprocessors of various architectures. It is therefore contemplated that one of ordinary skill in the art, having reference to this specification, will be readily able to implement the present embodiments in such other microprocessor architectures. It is further contemplated that the present invention may be realized in single-chip microprocessors and microcomputers or in multiple-chip implementations, with the manufacture of such integrated circuits accomplished according to silicon substrate, silicon-on-insulator, gallium arsenide, and other manufacturing technologies, and using MOS, CMOS, bipolar, BiCMOS, or other device implementations.

Microprocessor 110, as shown in Figure 10, is connected to other system devices by way of bus B. While bus B, in this example, is shown as a single bus, it is of course contemplated that bus B may represent multiple buses having different speeds and protocols, as is known in conventional computers utilizing the PCI local bus architecture; single bus B is illustrated here merely by way of example and for its simplicity. System 102 contains such conventional subsystems as communication ports 103 (including modem, ports and modems, network interfaces, and the like), graphics display system 104 (including video memory, video processors, a graphics monitor), main memory system 105 which is typically implemented by way of dynamic random access memory (DRAM) and includes a stack 107, input devices 106 (including keyboard, a pointing device, and the interface circuitry therefor), and disk system 108 (which may include hard disk drives, floppy disk drives, and CD-ROM drives). It is therefore contemplated that system 102 of Figure 10 corresponds to a conventional desktop computer or workstation, as are now common in the art. Of course, other system implementations of microprocessor 110 can also benefit from the present embodiments, as will be recognized by those of ordinary skill in the art.

Microprocessor 110 includes a bus interface unit ("BIU") 112 that is connected to bus B, and which controls and effects communication between microprocessor 110 and the other elements in system 102. BIU 112 includes the appropriate control and clock circuitry to perform this function, including write buffers for increasing the speed of operation, and including timing circuitry so as to synchronize the results of internal microprocessor operation with bus B timing constraints. Microprocessor 110 also includes clock generation and control circuitry 120 which, in this exemplary microprocessor 110, generates internal clock phases based upon the bus clock from bus B; the frequency of the internal clock phases, in this example, may be selectably programmed as a multiple of the frequency of the bus clock.

As is evident in Figure 10, microprocessor 110 has three levels of internal cache memory, with the highest of these as level 2 cache 114, which is connected to BIU 112. In this example, level 2 cache 114 is a unified cache, and is configured to receive all cacheable data and cacheable instructions from bus B via BIU 112, such that much of the bus traffic presented by microprocessor 110 is accomplished via level 2 cache 114, Of course, microprocessor 110 may also effect bus traffic around level 2 cache 114, by treating certain bus reads and writes as "not cacheable". Level 2 cache 114, as shown in Figure 10, is connected to two level 1 caches 116; level 1 data cache 116_{d} is dedicated to data, while level 1 instruction cache 116ᵢ is dedicated to instructions. Power consumption by microprocessor 110 is minimized by accessing level 2 cache 114 only in the event of cache misses of the appropriate one of the level 1 caches 116. Furthermore, on the data side, microcache 118 is provided as a level 0 cache, which in this example is a fully dual-ported cache.

Given the various levels of cache set forth immediately above, note further that microprocessor 110 may include a block move unit as described above. Thus, Figure 10 further includes a block move unit 24 connected bi-drectionally connected to level 2 cache 114. Thus, level 2 cache 114 may be read, and written to, by block move unit 24 in the manners described above. Moreover, although not shown so as not to further complicate Figure 10, each load store unit (described below as part of the execution stage) also provides the above-described CONTROL signal to the level 1 caches as well as to block move unit 24. From the above description of Figure 1 through 8, therefore, one skilled in the art will appreciate the operation of these components in connection with Figure 10.

As shown in Figure 10 and as noted hereinabove, microprocessor 110 is of the superscalar type. In this example multiple execution units are provided within microprocessor 110, allowing up to four instructions to be simultaneously executed in parallel for a single instruction pointer entry. These execution units include two ALUs 142₀, 142₂ for processing conditional branch, integer, and logical operations, floating-point unit (FPU) 130, two load-store units 140₀, 140₁, and microsequencer 148. The two load-store units 140 utilize the two ports to microcache 118, for true parallel access thereto, and also perform load and store operations to registers in register file 139 as well as providing the above-mentioned CONTROL signals to block move units 24a and 24b, as well as to the level 1 cahces 116_{d} and 116ᵢ. Data microtranslation lookaside buffer (µTLB) 138 is provided to translate logical data addresses into physical addresses, in the conventional manner.

These multiple execution units are controlled by way of multiple pipelines with seven stages each, with write back. The pipeline stages are as follows:
- F: Fetch: This stage generates the instruction address and reads the instruction from the instruction cache or memory
- PD0: Predecode stage 0: This stage determines the length and starting position of up to three fetched x86-type instructions
- PD1: Predecode stage 1: This stage extracts the x86 instruction bytes and recodes them into fixed length format for decode
- DC: Decode: This stage translates the x86 instructions into atomic operations (AOps)
- SC: Schedule: This stage assigns up to four AOps to the appropriate execution units
- OP: Operand: This stage retrieves the register and/or memory operands indicated by the AOps
- EX: Execute: This stage runs the execution units according to the AOps and the retrieved operands
- WB: Write back : This stage stores the results of the execution in registers or in memory

Referring back to Figure 10, the pipeline stages noted above are performed by various functional blocks within microprocessor 110. Fetch unit 126 generates instruction addresses from the instruction pointer, by way of instruction micro-translation lookaside buffer (µTLB) 122, which translates the logical instruction address to a physical address in the conventional way, for application to level 1 instruction cache 116ᵢ. Instruction cache 116ᵢ produces a stream of instruction data to fetch unit 126, which in turn provides the instruction code to the predecode stages in the desired sequence. Speculative execution is primarily controlled by fetch unit 126, in a manner to be described in further detail hereinbelow.

Predecoding of the instructions is broken into two parts in microprocessor 110, namely predecode 0 stage 128 and predecode 1 stage 132. These two stages operate as separate pipeline stages, and together operate to locate up to three x86 instructions and apply the same to decoder 134. As such, the predecode stage of the pipeline in microprocessor 110 is three instructions wide. Predecode 0 unit 128, as noted above, determines the seize and position of as many as three x86 instructions (which, of course, are variable length), and as such consists of three instruction recognizers; predecode 1 unit 132 recodes the multi-byte instructions into a fixed-length format, to facilitate decoding.

Decode unit 134, in this example, contains four instruction decoders, each capable of receiving a fixed length x86 instruction from predecode 1 unit 132 and producing from one to three atomic operations (AOps); AOps are substantially equivalent to RISC instructions. Three of the four decoders operate in parallel, placing up to nine AOps into the decode queue at the output of decode unit 134 to await scheduling; the fourth decoder is reserved for special cases. Scheduler 136 reads up to four AOps from the decode queue at the output of decode unit 134, and assigns these AOps to the appropriate execution units. In addition, the operand unit 144 receives and prepares the operands for execution, As indicated in Figure 10, operand unit 144 receives an input from scheduler 136 and also from microcode ROM 148, via multiplexer 145, and fetches register operands, and/or memory operands via load/store units 140₀ and or 140₁, for use in the execution of the instructions. In addition, according to this example, operand unit 144 performs operand forwarding to send results to registers that are ready to be stored, and also performs address generation for AOps of the load and store type.

Microsequencer 148, in combination with microcode ROM 146, control ALUs 142 and load/store units 140 in the execution of microcode entry AOps, which are generally the last AOps to execute in a cycle. In this example, microsequencer 148 sequences through microinstructions stored in microcode ROM 146 to effect this control for those microcoded microinstructions. Examples of microcoded microinstructions include, for microprocessor 110, complex or rarely-used x86 instructions, x86 instructions that modify segment or control registers, handling of exceptions and interrupts, and multi-cycle instructions (such as REP instructions, and instructions that PUSH and POP all registers).

Microprocessor 110 also includes circuitry 124 for controlling the operation of JTAG scan testing, and of certain built-in self-test functions, ensuring the validity of the operation of microprocessor 110 upon completion of manufacturing, and upon resets and other events.

Given the above description of microprocessor 110, one skilled in art may appreciate how the above principles may be applied to the circuitry of Figure 10. For example, a cache hierarchy is shown within microprocessor 110 with respect to the microcache 118, to level 1 data cache 116d, and to level 2 cache 114. As another example, a cache hierarchy is also shown within microprocessor 110 with respect to level 1 instruction cache 116i and level 2 cache 114. For either of these hierarchical paths, therefore, level 2 cache 114 and the cache below it may be concurrently accessed as demonstrated above.

From the above, one skilled in art may appreciate numerous benefits of the present embodiments. For example, a microprocessor in accordance with the various embodiments may retrieve information from a higher level cache up to one clock cycle earlier as compared to the prior art by concurrently accessing that higher level cache before determining whether a miss has occurred in a lower level cache. As another example, the concurrent cache accessing approach may apply to different types of information, such as data or instructions. Still further advantages of the present system have been stated above, which also demonstrate various alternative embodiments included within the inventive scope. Still other examples will be ascertainable by a person skilled in the art. For example, the principles demonstrated above may apply to different cache sizes, or caches having different set associativity. As another example, the bank interleaved memory system described may be modified, or its capability of prioritizing between different sources of addresses may be achieved using alternative circuit configurations. As still another example of the flexibility of the present embodiments, one skilled in the art is able to construct various different specific circuits to accomplish the above features and functionality. Indeed, these benefits and examples serve further to demonstrate that while the present embodiments have been described in detail, various substitutions, modifications or alterations could be made to the descriptions set forth above without departing from the inventive scope of the present invention.

## Claims

1. A microprocessor for coupling to a hierarchial memory hierarchy, comprising:
a first cache circuit;
a second cache circuit higher in said memory hierarchy than said first cache circuit;
circuitry for issuing an address corresponding to information stored in said memory;
circuitry for addressing said first cache circuit in response to said address to determine whether said first cache circuit stores said information;
circuitry for addressing said second cache circuit in response to said address to determine whether said second cache circuit stores said information; and
wherein said circuitry for addressing said second cache circuit addresses said second cache circuit with said address before it is determined whether said first cache circuit stores said information.

2. The microprocessor of Claim 1 further comprising:
circuitry for determining whether said first cache circuit stores said information;
circuitry, responsive to determining said first cache circuit does not store said information, for determining whether said second cache circuit stores said information; and
circuitry, responsive to determining said second cache circuit stores said information, for reading said information from said second cache circuit.

3. The microprocessor of Claim 1 or Claim 2, wherein said first cache circuit is arranged for storing data information and said second cache circuit is arranged for storing data information.

4. The microprocessor of Claim 3, wherein said circuitry for addressing said second cache circuit comprises circuitry for addressing said second cache circuit in response to a physical address during a microprocessor clock cycle; said microprocessor further comprising circuitry for translating a virtual address to said physical address prior to said microprocessor clock cycle.

5. The microprocessor of Claim 1 or Claim 2, wherein said first cache circuit is arranged for storing instruction information; and said second cache circuit is arranged for storing instruction information.

6. The microprocessor of Claim 5; wherein said circuitry for addressing said second cache circuit comprises circuitry for addressing said second cache circuit in response to a line address during a microprocessor clock cycle; and wherein said microprocessor further comprises circuitry for translating a virtual page offset to a physical page offset prior to said microprocessor clock cycle, said line address comprising a portion of said physical page offset; and
wherein said line address further comprises a predicted page number portion.

7. The microprocessor of Claim 6 further comprising:
circuitry for translating a virtual page number to a physical page number during said microprocessor clock cycle; and
circuitry for comparing a portion of said physical page number to said predicted page number portion during said microprocessor clock cycle.

8. The microprocessor of Claim 7, further comprising:
circuitry for reading said information from said second cache circuit in response to determining said portion of said physical page number matches said predicted page number portion and said determining said second cache circuit stores said information.

9. The microprocessor of any preceding Claim, wherein said circuitry for addressing said second cache circuit addresses said second cache circuit during a microprocessor clock cycle, said microprocessor further comprising circuitry for addressing a first of a plurality of bank interleaved tag memories in said second cache circuit; and
circuitry for addressing at least one more of said plurality of bank interleaved tag memories in said second cache circuit during said microprocessor clock cycle.

10. The microprocessor of Claim 9 further comprising:
circuitry for determining whether a cache hit occurs for each of said plurality of bank interleaved tag memories addressed during said microprocessor clock cycle.

11. The microprocessor of Claim 10 further comprising:
circuitry for determining whether said first cache stores said information.

12. The microprocessor of Claim 11, wherein said second cache circuit further comprises an information memory;
each of said first and said at least one other of said plurality of bank interleaved memories being addressed in response to a corresponding address having an assigned priority; and
said microprocessor further comprising:
circuitry, responsive to determining that said first cache circuit stores said information, for outputting from said information memory information responsive to an address having a highest one of said assigned priorities but not corresponding to said address of said information in said first cache circuit.

13. The microprocessor of any of Claims 10 to 12, wherein said second cache circuit further comprises an information memory;
each of said first and said at least one more of said plurality of bank interleaved memories being addressed in response to a corresponding address having an assigned priority; and
circuitry, responsive to determining that said first cache circuit does not store said information, for outputting from said information memory information responsive to an address having a highest one of said assigned priorities.
